# EUROPÄISCHE PATENTSCHRIFT

(11) **EP 2 498 970 B1**
(45) Veröffentlichungstag und Bekanntmachung des Hinweises auf die Patenterteilung: **27.07.2016**
(21) Anmeldenummer: 10771731.6
(22) Anmeldetag: 27.10.2010
(51) Int. Cl.: B29C 47/88, B29C 47/92

(54) **VORRICHTUNG UND VERFAHREN ZUR HERSTELLUNG VON FOLIENSCHLÄUCHEN**
DEVICE AND METHOD FOR PRODUCING FILM TUBING
DISPOSITIF ET PROCÉDÉ DE FABRICATION DE FILMS TUBULAIRES

(30) Priorität: 09.11.2009 DE 102009046539
(43) Veröffentlichungstag der Anmeldung: 19.09.2012
(73) Patentinhaber: Windmöller & Hölscher KG, 49525 Lengerich (DE)
(72) Erfinder: JOPPE, Markus, 49497 Mettingen (DE); GOLUBSKI, Karsten, 45721 Haltern am See (DE); LINKIES, Jürgen, 49536 Lienen (DE)
(86) Internationale Anmeldenummer: PCT/EP2010/066248
(87) Internationale Veröffentlichungsnummer: WO 2011/054715

(56) Entgegenhaltungen:
- DE-A1- 2 062 789
- JP-A- 10 272 692
- JP-A- 59 016 721
- JP-A- 2000 025 109

## Beschreibung

Die Erfindung betrifft eine Vorrichtung zur Herstellung von Folienschläuchen nach dem Oberbegriff des Anspruchs 1 sowie ein Verfahren nach dem Oberbegriff des Anspruchs 6.

Folienschläuche werden in der Regel mittels Blasfolienextrusionsvorrichtungen und -verfahren hergestellt. Dazu wird ein Blaskopf genutzt, dem ein oder mehrere Schmelzeströme aus plastifiziertem Kunststoff zugeführt werden. Jede Schmelze wird in dem Blaskopf möglichst gleichmäßig ringförmig verteilt. Bei mehreren Schmelzen werden nun die einzelnen Schmelzeschichten zusammengeführt. Der so geformte ein- oder mehrschichtige Schlauch verlässt den Blaskopf durch eine ringförmige Düse in einer Transportrichtung.

Um nun den Folienschlauch möglichst schnell abzukühlen und ihn in eine stabile Form zu bringen, folgt dem Blaskopf in Transportrichtung nun wenigstens eine den Folienschlauch zumindest bereichsweise ringförmig einfassende Fluidbeaufschlagungseinrichtung. Als Fluid ist häufig Luft vorgesehen, es sind aber auch andere, insbesondere gasförmige Fluide möglich. Das Fluid kann sektorenweise gekühlt oder erwärmt sein, um lokal noch Einfluss auf die Dicke des Folienschlauchs nehmen zu können. Auch der Volumenstrom kann variiert werden.

Das Fluid wird von der Fluidbeaufschlagungseinrichtung und auch durch den Folienschlauch ebenfalls in die Transportrichtung befördert. Nach dem Verlassen der Beaufschlagungseinrichtung findet ein Druckausgleich mit der Umgebungsluft statt, so dass die Kühlwirkung rasch nachlässt.

Die Bauhöhe der Beaufschlagungseinrichtung ist in der Regel sehr begrenzt, da der Folienschlauch durch einen gegenüber dem Umgebungsdruck leicht erhöhten Innendruck in radialer Richtung ausgedehnt wird. Hierdurch wird das Format des Folienschlauches bestimmt.

Um die Kühlwirkung des Fluids zu steigern, schlägt die Druckschrift CA 2 155 135 C vor, einen Ring vorzusehen, der den ringförmigen Bereich der Fluidbeaufschlagungseinrichtung konzentrisch einfasst und diesen in Transportrichtung überragt. Konkret bedeutet dies, dass der Ring, der aus Plexiglas beschaffen sein kann, an dem oberen Ende des ringförmigen Bereichs befestigt ist. Dem Ring kann jeweils ein weiterer Ring folgen. Jeder weitere Ring ist gegenüber dem vorherigen Ring im Durchmesser größer und mittels Distanzstücken in radialer Richtung von diesem ferngehalten und mittels Schrauben an dem oberen Rand des vorherigen Rings befestigt. Diese Ringe führen dazu, dass die kühlende Luft länger am Folienschlauch verbleibt und so die Kühlwirkung verbessert. Zwischen dem ringförmigen Bereich und dem Ring beziehungsweise zwischen zwei Ringen sind offene Bereiche vorgesehen, durch die zudem ein Druckausgleich stattfinden kann. In der Regel wird durch diese offenen Bereiche weitere Luft angesaugt (bekannt als Schornsteineffekt), welche eine zusätzliche Kühlwirkung entfalten kann. Da nun vom Folienschlauch mehr Wärme pro Zeiteinheit abgegeben werden kann, kann die Produktionsgeschwindigkeit des Folienschlauches erhöht werden.

Die in der CA 2 155 135 vorgeschlagene Lösung hat allerdings den Nachteil, dass bei der Veränderung des Schlauchformates die Ringe nur durch Demontage und Montage anderer Ringe anpassbar ist. Außerdem ist die ringförmige Düse des Blaskopfes schlecht zugänglich, was vor allem bei Produktionsbeginn, bei dem die aus der ringförmigen Düse herausquellende Schmelze händisch abgezogen werden muss, ein Nachteil ist.

Die Veröffentlichungen JP 10 272692 A, JP 59 016721 A, JP 2000 025109 A und DE 2 062 789 A1 offenbaren jeweils verstellbare Elemente, die für eine verlängerte Führung der Kühlluft nahe des Folienschlauches sorgen, auch wenn das Schlauchformat geändert wird. Die Kühlwirkung wird hiermit zwar verbessert, kann aber nicht als optimal bezeichnet werden.

Ausgehend von der CA 2 155 135 ist die Aufgabe der vorliegenden Erfindung es daher, eine beschriebene Vorrichtung und ein Verfahren zur Herstellung von Folienschläuchen vorzuschlagen, mit denen die optimale Kühlwirkung für jeden Blasendurchmesser erzielt werden kann.

Gelöst wird die Aufgabe durch eine Vorrichtung nach dem Oberbegriff des Anspruchs 1, welche zusätzlich die Merkmale des Kennzeichens dieses Anspruchs umfasst, sowie durch ein Verfahren nach dem Oberbegriff des Anspruchs 6, welches die kennzeichnenden Merkmale dieses Anspruchs umfasst.

Demnach ist eine Verstelleinrichtung vorgesehen, mit welcher der Ring relativ zur Fluidbeaufschlagungseinrichtung höhenverstellbar ist, wobei die Verstelleinrichtung in Transportrichtung des Folienschlauches weisende Stützelemente umfasst, in welche schräg verlaufende Führungsnuten eingebracht sind, und wobei jeder Ring Stifte umfasst, welche in die Führungsnuten greifen. Auf dieses Weise kann der den ringförmigen Teil der Fluidbeaufschlagungseinrichtung einfassende Ring zunächst in einer Position gehalten werden, in der der Ring nicht oder nicht wesentlich den ringförmigen Teil der Fluidbeaufschlagungseinrichtung überragt. Damit ist die ringförmige Düse gut erreichbar, was für den Beginn der Produktion wichtig ist. Sobald die Produktion erfolgreich begonnen wurde und die Form des Folienschlauches ausreichend stabil ist, kann der Ring mittels der Verstelleinrichtung in Richtung der Transportrichtung des Folienschlauches verstellt werden. Da die Transportrichtung in der Regel vertikal und dabei nach oben gerichtet ist, wird bei der Verstellung der Einfachheit halber von "Höhenverstellung" gesprochen. Der Betrag der Verstellung kann nun in Abhängigkeit von dem Durchmesser der Blase gewählt werden. Bei gleichem Folienmaterial ist bei höherem Innendruck der Durchmesser größer als bei niedrigerem Innendruck. Im ersten Fall wird dann der Ring nicht so weit verstellt wie im zweiten Fall. Mit der erfindungsgemäßen Vorrichtung kann so die optimale Kühlwirkung für jeden Blasendurchmesser erzielt werden. Zum Anpassen an den Durchmesser muss der Ring nun nicht mehr ausgetauscht werden.

Gemäß der Erfindung ist weiterhin vorgesehen, dass die Verstelleinrichtung sich in Transportrichtung des Folienschlauches erstreckende Stützelemente umfasst, die sich auf der Fluidbeaufschlagungseinrichtung und/oder den Ringen abstützen. Dabei haben die Stützelemente schräge, etwa schraubenlinienförmig verlaufende Führungsnuten. Jeder Ring umfasst nun sich nach innen erstreckende Stifte, wobei jeder Stift in eine Führungsnut eingreift. Durch einfaches Drehen eines Ringes erfolgt nun eine Höhenverstellung. Da die Ringe von außen leicht erreichbar sind, kann diese Art der Einstellung händisch erfolgen. Die kann durch eine einzelne Person erfolgen.

Weiterhin ist erfindungsgemäß vorgesehen, dass der Ring von jeweils einem weiteren Ring konzentrisch eingefasst wird, wobei Bereiche zwischen den Ringen offen sind, so dass durch diese offenen Bereiche ein Druckausgleich stattfinden kann. Jeder Ring ist relativ zur Fluidbeaufschlagungseinrichtung und relativ zum durch diesen Ring eingefassten Ring mittels einer Verstelleinrichtung höhenverstellbar. Jedem Ring kann eine eigene Verstelleinrichtung zugeordnet sein, die den Ring relativ zu dem eingefassten Ring verstellt. In diesem Fall kann durch die Wahl der Höhenposition der einzelnen Ringe die Blasenform gut nachempfunden werden, was zu einer guten Kühlwirkung führt. Es kann aber auch eine gemeinsame Verstelleinrichtung vorgesehen sein, welche alle Ringe gleichzeitig verstellt. Eine solche Verstelleinrichtung kann mechanisch einfacher aufgebaut sein.

Es ist weiterhin vorteilhaft, wenn jeder Ring an dem eingefassten Ring oder an der Fluidbeaufschlagungseinrichtung arretierbar ist. Während in einer einfachen Form wegen ausreichender Haftreibung keine Arretierung notwendig ist, empfiehlt es sich, ein Arretierungsmittel vorzusehen. Dies kann eine Klemmschraube, ein Spannelemente, eine normale Schraube oder ein Stift, welche in eine Bohrung greifen können, sein.

Vorteilhaft ist auch, wenn die Führungsnuten sich in Richtung der Schwerkraft erstreckende Nutansätze umfassen. Damit können die Ringe in diese Nutansätze eingehängt oder eingerastet werden. Arretiermittel sind in diesem Fall nicht notwendig.

In einer weiteren, vorteilhaften Ausführungsform der Erfindung ist zumindest ein elektromotorischer Antrieb für die Höhenverstellung vorgesehen, mit welchem sich der Ring oder die Ringe in der Höhe verstellen lassen. Der Elektromotor kann beispielsweise auf die Spindel oder die Spindelmutter einer Spindel-Spindelmutterkombination wirken. Auch viele andere mechanische, verstellbare Verbindungsmöglichkeiten sind denkbar.

Insbesondere ist denkbar, dass jedem Ring zumindest ein elektromotorischer Antrieb zugeordnet ist. Damit können die relativen Positionen der einzelnen Ringe ohne händisches Eingreifen eingestellt werden. Mehrere elektromotorische Antriebe sind insbesondere bei einer Vorrichtung vorteilhaft, bei der die Folienproduktion automatisiert erfolgt. Dabei kann beispielsweise der Blaseninnendruck durch eine Steuervorrichtung eingestellt werden. Entsprechend dieser Steuervorgaben können auch die einzelnen Elektromotoren zur Positionierung der Ringe angesteuert werden.

Weitere Ausführungsbeispiele der Erfindung gehen aus den Figuren und der gegenständlichen Beschreibung hervor.

Die einzelnen Figuren zeigen:
- Fig. 1: Prinzipskizze einer erfindungsgemäßen Vorrichtung in der Seitenansicht
- Fig. 2: eine perspektivische Ansicht einer erfindungsgemäßen Vorrichtung
- Fig. 3: eine weitere perspektivische Ansicht einer erfindungsgemäßen Vorrichtung
- Fig. 4: eine perspektivische Ansicht einer weiteren Ausführungsform einer erfindungsgemäßen Vorrichtung
- Fig. 5: eine perspektivische Ansicht einer anderen Ausführungsform einer erfindungsgemäßen Vorrichtung.
- Fig. 6: eine perspektivische Ansicht noch einer Ausführungsform einer erfindungsgemäßen Vorrichtung.
- Fig. 7: Ansicht VII - VII aus Figur 6.

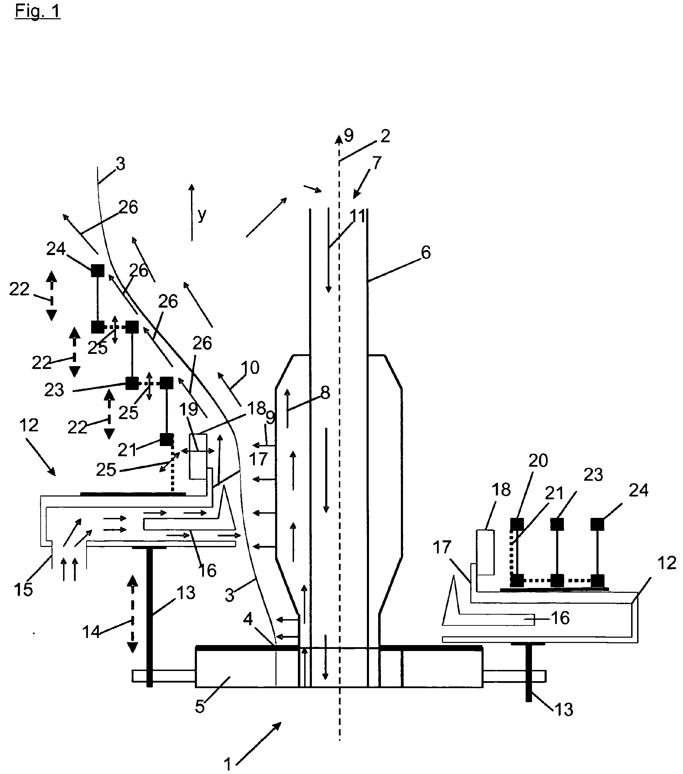

Fig. 1 zeigt eine Seitenansicht einer Prinzipskizze einer erfindungsgemäßen Vorrichtung 1 zur Herstellung von Folienschläuchen, wobei die Prinzipskizze durch den mit dem Pfeil versehene, gestrichelte Linie 2 zweigeteilt ist. Die linke Seite stellt die Vorrichtung im Betrieb dar, wogegen die rechte Seite die erfindungsgemäße Vorrichtung im Ruhezustand zeigt. Der Pfeil an der Spitze der gestrichelten Linie stellt zugleich die Transportrichtung y des Folienschlauches 3 dar.

Die linke Seite des Bildes zeigt den Folienschlauch 3 beim Austritt aus der ringförmigen Düse 4 des Blaskopfes 5. In Transportrichtung y gesehen wird der Folienschlauch immer breiter. In seinem, beim Austritt aus der Düse 4 noch nicht verfestigtem Zustand lässt sich der Folienschlauch 3 noch leicht recken, d. h. in radialer Richtung ausdehnen. Dies erfolgt durch den Aufbau eines leichten Überdrucks im Inneren des Folienschlauches 3. Hierzu ist eine so genannte Innenkühleinrichtung 6 vorgesehen, welche vom Blaskopf ausgehend in das Innere des Folienschlauches 3 hineinragt. Die notwendige Luftzufuhr erfolgt durch entsprechende Bohrungen und/oder Leitungen im Blaskopf 5. Aus den im Außenumfang der Innenkühleinrichtung 6 eingebrachten Öffnungen strömt kühlende Luft aus. Diese wird gegen die Innenwand des Folienschlauches gerichtet, um eine Kühlwirkung zu erzielen. Durch den Überdruck weitet sich der Folienschlauch immer weiter auf, wie es durch den eingezeichneten Verlauf beispielhaft verdeutlicht wird, bis der Schlauch die so genannte Frostlinie erreicht hat. Durch den Luftabzug 7 wird die durch diesen Prozess erwärmte Luft wieder aus dem Blaseninneren entfernt. Die Pfeile 8, 9, 10 und 11 verdeutlichen die Luftströmung.

Oberhalb des Blaskopfes 5 ist eine Außenkühleinrichtung 12 angeordnet. Diese verläuft vollständig um den Folienschlauch 3 herum und ist relativ zum Blaskopf 5 durch Hubeinrichtungen 13 anhebbar. Die Bewegungsrichtung in oder gegen die Transportrichtung y wird durch den Pfeil 14 verdeutlicht. Die linke Seite der Figur 1 zeigt die Außenkühleinrichtung in einer angehobenen Position. Der Außenkühleinrichtung 12 wird durch Zuführrohre 15 ein Kühlmittel zugeführt. Dieses Kühlmittel, vorzugsweise Luft, kann sektorenweise in bekannter Art temperiert werden. Der Kühlmittelstrom kann nun durch verschiedene Trenneinrichtungen in kleinere Ströme aufgeteilt werden. Ein so entstandener, erster Stromteil kann senkrecht auf die Wand des Folienschlauches 3 geleitet werden, während ein zweiter Teil abgelenkt und in paralleler Richtung des Folienschlauches 3 geleitet wird.

Die Außenkühleinrichtung 12 umfasst einen ringförmigen Bereich 17, an dessen oberen Ende eine ringförmige Einfassung 18 vorgesehen ist. Diese ringförmige Einfassung ist über ein nicht dargestelltes Gewinde mit dem ringförmigen Bereich der Außenkühleinrichtung 12 verbunden. Die ringförmige Einfassung umfasst nicht näher gezeigte Öffnungen, durch die ein Druckausgleich mit der Umgebungsluft erfolgen kann, dargestellt durch den Pfeil 19.

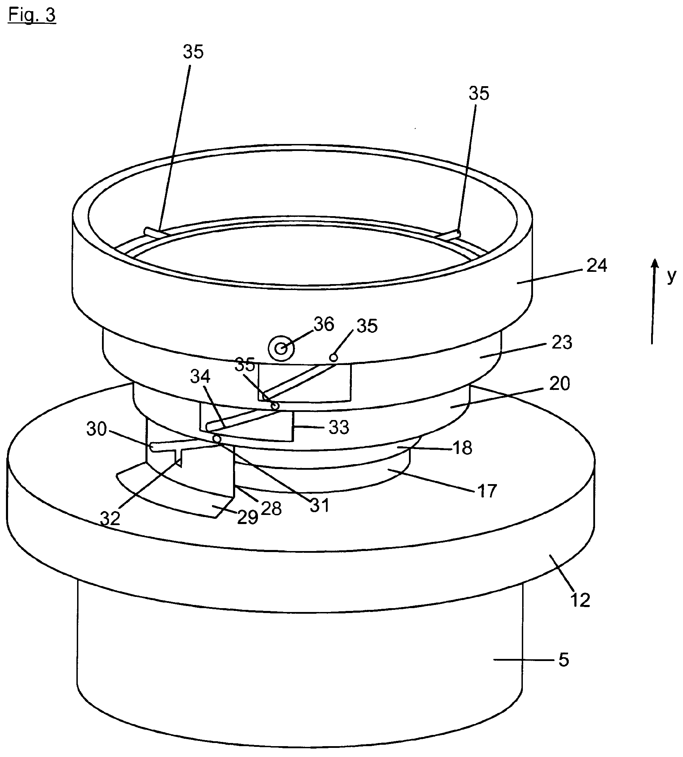

Die ringförmige Einfassung 18 ist umgeben von einem ersten Ring 20, der mittels einer Verstelleinrichtung 21 relativ zur Außenkühleinrichtung 12 in und entgegen der Transportrichtung des Folienschlauches 3 verstellbar ist (siehe Pfeil 22). Die Verstelleinrichtung 21 ist in der Fig. 1 nur durch eine punktierte Linie angedeutet. Konkrete Ausführungsformen werden anhand der Figuren 3 bis 5 erläutert. Die Verstelleinrichtung 21 stützt sich auf der Außenkühleinrichtung 12 ab. Dem Ring 20 folgen die Ringe 23 und 24, die jeweils einen größeren Durchmesser haben, so dass sich die Ringe umschließen. Die rechte Seite der Figur 1 stellt die Ringe 20, 23, 24 in ihrer abgesenkten Position dar, in der sie die ringförmige Einfassung kaum überragen und damit den Zugang zur ringförmigen Düse 4 des Blaskopfes 5 nicht oder nicht nennenswert einschränken. Die linke Seite der Figur 1 verdeutlicht, dass die Ringe 20, 23, 24 entlang der Pfeile 22 verschiebbar sind. Der Ring 23 stützt sich in dem gezeigten Fall auf dem Ring 20 ab, der Ring 24 auf dem Ring 23. Die Abstützungen 27 sind als offene Konstruktionen ausgeführt und sind daher als punktierte Linie dargestellt. Das bedeutet, dass weite Bereich zwischen dem Ring 20 und dem Ring 23 beziehungsweise zwischen dem Ring 23 und dem Ring 24 offen sind, so dass durch diese offenen Bereiche ein Druckausgleich stattfinden kann. Je nach Druckverhältnissen kann die Luft in eine der beiden durch die Doppelpfeile 25 verdeutlichten Strömungsrichtungen strömen. Die Luftströmung entlang des Außenumfangs des Folienschlauches 3 wird durch die Pfeile 26 verdeutlicht. Durch die Strömung innerhalb der Ringe 20, 23, 24 entsteht an den offenen Bereichen zwischen den Ringen in der Regel ein Unterdruck, so dass durch die offenen Bereiche weitere Luft zugeführt wird, die für einen weiteren Kühleffekt sorgt.

Die Ringe bestehen vorteilhafterweise aus Plexiglas, so dass der Folienschlauch 3 zu beobachten ist. Die Ringe können allerdings auch aus anderen Kunststoffen, aber auch aus Metallen, wie etwas aus Aluminium, welches an sich leicht ist, bestehen. Auch weitere Werkstoffe wie Glas sind grundsätzlich denkbar. Leichte Materialien werden jedoch bevorzugt.

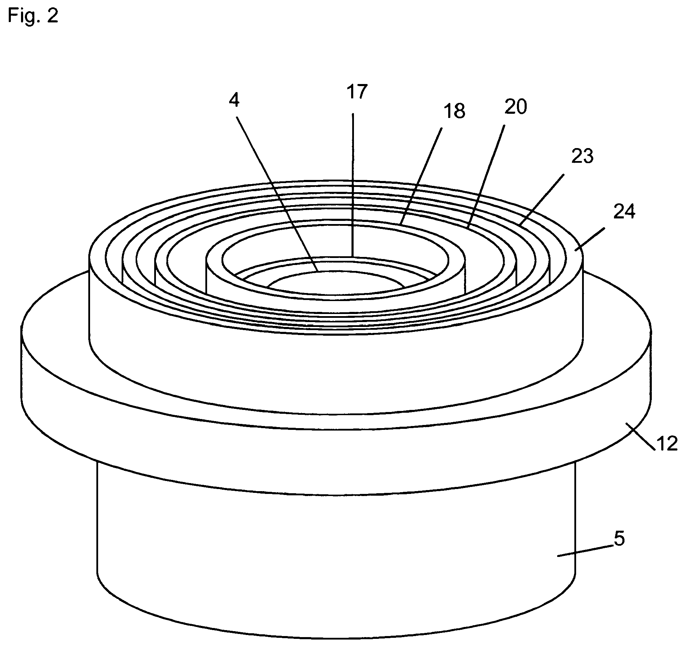

Die Figur 2 zeigt eine perspektivische Ansicht der erfindungsgemäßen Vorrichtung gemäß der rechten Seite der Figur 1, das heißt alle Ringe 20, 23 und 24 befinden sich in ihrer abgesenkten Position. Zu erkennen ist in dieser Darstellung die ringförmige Düse 4, die zum Start des Extrusionsprozesses, aber auch für Reinigungszwecke gut erreichbar ist.

Die Figur 3 zeigt nun eine erste Ausführungsform der Verstelleinrichtung 21. Ein Stützblech 28 stützt sich auf der Oberfläche der Außenkühleinrichtung ab. Dazu kann das Blech 28 einen abgekanteten Teil 29 umfassen. Es ist nur ein Blech 28 dargestellt, es empfiehlt sich jedoch zumindest drei, insbesondere vier, solcher Bleche 28 vorzusehen. Das Blech 28 umfasst eine schräg nach oben verlaufende Nut 30. In diese Nut greift ein Stift 31 ein, der in der Wand des Ringes 20 eingebracht ist und sich in radialer Richtung nach innen erstreckt. Durch ein Drehen des Ringes 20 links herum wird er dem Verlauf der Nut 30 entsprechend gleichzeitig angehoben. Um ein Zurückrutschen des Ringes 20 in seine Ausgangsposition zu verhindern, kann die Nut mit mehreren Nutansätzen versehen sein, von denen ein Nutansatz 32 gezeigt ist. Die Nutansätze stellen verschiedene Raststufen und damit verschiedene, allerdings nur diskret wählbare Höhenpositionen dar. Der Ring 20 trägt eine Platte 33, die eine ebenfalls schräg verlaufende Nut 34 umfasst, in die der Stift 35 des Rings 23 eingreift. Auf dem Umfang des Ringes 20 können mehrere Platten 33 verteilt sein. Die Arretierung des Rings 23 an dem Ring 20 kann einfach dadurch erfolgen, dass der Innenumfang des Rings 23 gegen die Platte 33 drückt, so dass eine für das Festhalten des Rings 23 ausreichende Haftreibung entsteht.

Auch der Ring 23 kann mit Platten 33, die Nuten 34 umfassen, versehen sein. Die Stifte 35 der Platte 24 fassen in diese Nuten 34. Anhand des Rings 24 wird eine weitere Möglichkeit der Arretierung deutlich. In diesem Fall ist ein Handknauf 36 vorgesehen, mit dem eine Schraube, die eine Gewindebohrung durchsetzt, gegen den Ring 23 oder gegen die Platte 33 des Rings 23 drehbar ist.

Anhand der Figur 3 wurden verschiedene Arretierungsmöglichkeiten dargestellt, welche selbstverständlich auf alle Ringe anwendbar sind.

Die Höhenverstellung erfolgt bei allen Ringen durch ein Verdrehen. Da jeder Ring nur von dem nächst inneren getragen wird, ist eine unabhängige Höhenverstellung eines jeden Rings möglich. Eine optimale Anpassung der Höhenpositionen an die Form des Folienschlauches 3 (in dieser Figur nicht gezeigt) kann daher auf einfache Weise erfolgen.

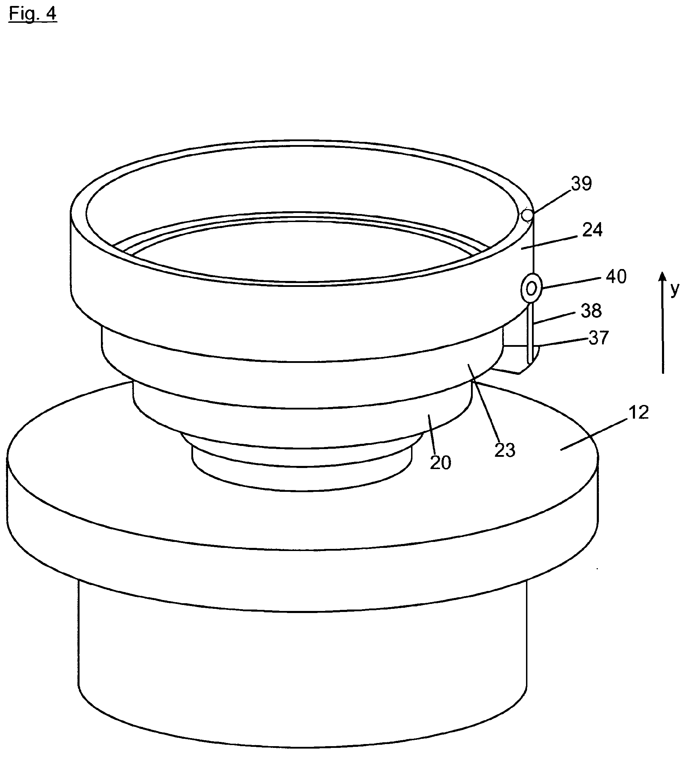

Die Figur 4 zeigt eine Ausführungsform der Verstelleinrichtung. In diesem Fall trägt ein nach außen ragendes und an dem Ring 23 befestigtes Tragstück 37 eine Stange 38, welche beispielsweise in eine in den Ring 24 eingebrachte Bohrung hineinragt. Zur Höhenverstellung kann nun der Ring 24 relativ zum Ring 23 in Richtung y verschoben werden und in der gewünschten Position mit der Befestigungsschraube 40 arretiert werden. In einer mit einem Elektromotor (nicht gezeigt) versehenen Ausführungsform könnte die Stange als Gewindestange ausgebildet sein, die dann vom Elektromotor in Rotation versetzt wird. Die Bohrung 40 wäre dann als Gewindebohrung ausgestaltet, in die die Stange 38 eingeschraubt ist. Die Drehung der Stange 40 hat dann eine Höhenverstellung des Rings 24 zur Folge. Der Elektromotor könnte sich auf dem Tragstück 37 abstützen. An den Ringen 20 und 21 müssten mehrere derartige Anordnungen vorgesehen werden (nicht dargestellt), ebenso auf der Außenkühleinrichtung 12.

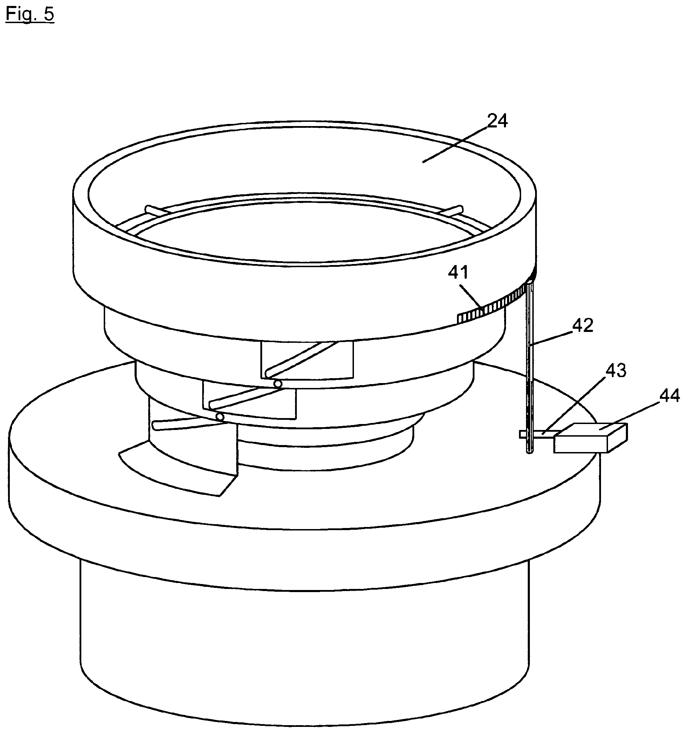

Ein weiteres Ausführungsbeispiel der Erfindung ist in der Figur 5 gezeigt. Der grundsätzliche Aufbau der Vorrichtung entspricht der Figur 3. Im vorliegenden Fall umfasst der Ring 24 jedoch an seiner Außenfläche ein Zahnkranzsegment 41, das einer Welle 42 kämmt, die über ihre gesamte Länge als Zahnrad ausgeführt ist. Angetrieben wird die Welle 42 von einer von dem Elektromotor 44 in Drehung versetzten Schnecke 43 angetrieben wird. Mit dieser Ausführungsform ist ein gemeinsamer Antrieb für alle Ringe 20, 23 und 24 möglich. Ausgehend von der absenkten Position wird zunächst der Ring 24 gedreht und damit angehoben. Anschließend nimmt der Ring 24 den Ring 23 und dann der Ring 23 den Ring 20 mit, bis alle Ringe angehoben sind. Um eine individuelle Verstellmöglichkeit eines jeden Rings zu ermöglichen, kann für jeden Ring der gezeigte Antrieb vorgesehen werden.

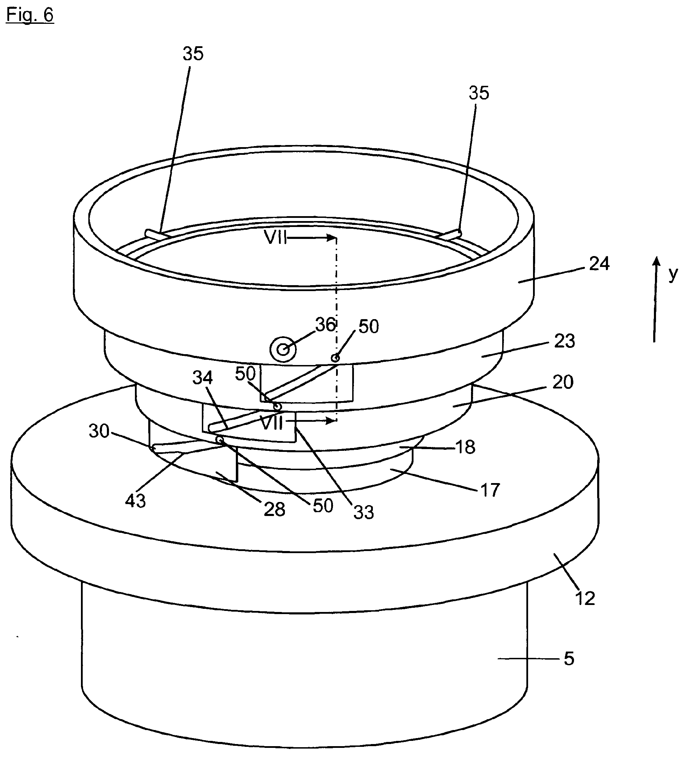

Die Ausführungsform gemäß der Figur 6 ist eine leichte Abwandlung der Ausführungsform gemäß der Figur 3. In der Figur 6 wurden die Nutansätze 32 durch Nutabflachungen 43 ersetzt. Diese Abflachungen 43 haben waagerechte oder abfallende Kanten, wobei "abfallend" in Bezug auf die Drehrichtung links herum gemeint ist. Im Gegensatz zu der Nutzung der Nutansätze 32 muss bei diesen Abflachungen nicht der nächste Ring 20 aus angehoben werden, um die nächste Raststufe zu erreichen. Vielmehr reicht ein etwas erhöhter Kraftaufwand in Drehrichtung.

Das Stützblech 28 kann, wie in der Figur 6 gezeigt ist, anstelle der Befestigung auf der Oberfläche der Außenkühleinrichtung auch an der ringförmigen Einfassung 18 befestigt sein, was einen etwas geringeren Montageaufwand verursacht.

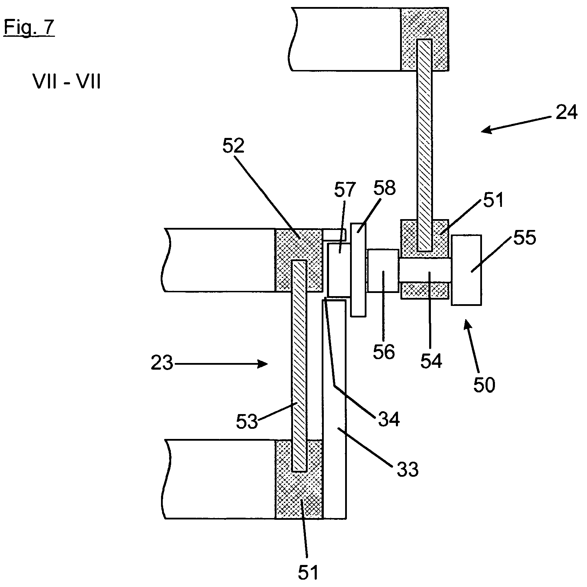

Mit dem Ausführungsbeispiel gemäß der Figur 6 wird eine Alternative zum Stift 31 bzw. 35 erläutert. Die Stifte 31, 35 wurden durch Führungselemente 50 ersetzt, die anhand der Figur 7 näher erläutert werden.

Die Figur 7 zeigt zunächst eine bevorzugte Ausführungsform des Rings 23. Dieser besteht aus zwei übereinander angeordneten Ringen 51 und 52, die aus Metall, beispielsweise Aluminium gefertigt sein können. In die einander zugewandten Seiten dieser Ringe sind Nuten eingearbeitet, in die kreisbogenförmige Distanzstücke 53 eingeschoben sind. Es kann ein umlaufendes Distanzstück 53 vorgesehen sein, jedoch sind auch mehrere Stücke denkbar, die zusammen genommen umlaufend sind. Die Ringe 51, 52 können durch die Platten 33 und/oder durch weitere, hier nicht gezeigte Fixierelemente miteinander verbunden sein. Die Distanzstücke 53 bestehen beispielsweise aus Plexiglas, welches leicht ist und die Beobachtung der Folienblase ermöglicht. Als noch leichteres Material kommt auch Aluminium in Frage. Aber auch andere Metalle wie Stahl sind an dieser Stelle denkbar. Die Ringe 20 und 24 können genauso wie der Ring 23 aufgebaut sein.

Das Führungselement 50 umfasst ein Grundelement 54, welches durch eine Bohrung in dem Ring 51 des Rings 24 hindurch gesteckt und geeignet fixiert sein. Das Grundelement 54 kann einen Kopf 55 tragen. Grundelement und Kopf können auch einstückig, beispielsweise aus Schraube, die in den Ring 51 eingeschraubt ist, ausgebildet sein. Auf das Grundelement 54 ist ein Distanzstück 56 aufgeschoben oder aufgeschraubt. Zudem trägt das Grundelement 54 ein Führungsröllchen 57, welches auf dem Grundelement 54 drehbar, aber in axialer Richtung unverschiebbar ist. Dieses Führungsröllchen läuft entlang der Nut 34 der Platte 33 und ermöglicht so eine relatives Verschieben des Rings 24 zum Ring 23, welches ohne übermäßigen Kraftaufwand erfolgt. Das Führungsröllchen kann beispielsweise aus Messing oder ähnlichen geeigneten Materialien bestehen, so dass die Reibung zwischen Röllchen 57 und Grundelement 54 möglichst gering ist. Zwischen Führungsröllchen 57 und Grundelement können zu diesem Zweck allerdings auch Kugel- oder Rollenlager vorgesehen werden. Das Führungsröllchen umfasst neben dem Teil, welches in der Nut 34 abrollt, auch einen in seinem Durchmesser erweiterten Steg 58, welcher verhindert, dass sich das Führungselement 50 in einer Richtung relativ zu der Nut verschiebt. Da über den Umfang des Rings 24 zumindest drei solcher Führungselemente vorgesehen sind, wird auf diese Weise ein radiales Verschieben des Rings 24 relativ zu dem Ring 23 verhindert.

Die gezeigten Ausführungsformen sind jedoch nur Beispiele. Merkmale der gezeigten Beispiele sind miteinander kombinierbar. Der Fachmann kennt jedoch auch weitere Ausführungsbeispiele, die er einsetzen könnte, ohne den erfinderischen Gedanken zu verlassen.

| **Bezugszeichenliste** | |
|---|---|
| 1 | Vorrichtung zur Herstellung von Folienschläuchen |
| 2 | Gestrichelte Linie |
| 3 | Folienschlauch |
| 4 | Ringförmige Düse |
| 5 | Blaskopf |
| 6 | Innenkühleinrichtung |
| 7 | Luftabzug |
| 8 | Luftströmung innerhalb des Folienschlauches |
| 9 | Luftströmung innerhalb des Folienschlauches |
| 10 | Luftströmung innerhalb des Folienschlauches |
| 11 | Luftströmung innerhalb des Folienschlauches |
| 12 | Außenkühleinrichtung |
| 13 | Hubeinrichtung |
| 14 | Pfeil |
| 15 | Zuführrohre |
| 16 | Trenneinrichtung |
| 17 | Ringförmiger Bereich |
| 18 | Ringförmige Einfassung |
| 19 | Pfeil |
| 20 | Erster Ring |
| 21 | Verstelleinrichtung |
| 22 | Pfeil |
| 23 | Ring |
| 24 | Ring |
| 25 | Doppelpfeil |
| 26 | Pfeil |
| 27 | Abstützung |
| 28 | Stützblech |
| 29 | Abgekanteter Teil |
| 30 | Nut |
| 31 | Stift |
| 32 | Nutansatz |
| 33 | Platte |
| 34 | Nut |
| 35 | Stift |
| 36 | Handknauf |
| 37 | Tragstück |
| 38 | Stange |
| 39 | Bohrung |
| 40 | Befestigungsschraube |
| 41 | Zahnkranzsegment |
| 42 | Welle |
| 43 | Nutabflachung |
| 44 | |
| 45 | Schnecke |
| 46 | Elektromotor |
| 47 | |
| 48 | |
| 49 | |
| 50 | Führungselement |
| 51 | Ring |
| 52 | Ring |
| 53 | Distanzstück |
| 54 | Grundelement |
| 55 | Kopf |
| 56 | Distanzstück |
| 57 | Führungsröllchen |
| 58 | erweiterter Steg |
| | |
| y | Transportrichtung des Folienschlauches 3 |
| | |
| | |
| | |

## Patentansprüche

1. Vorrichtung (1) zur Herstellung von Folienschläuchen (3), umfassend:
einen Blaskopf (5) mit einer ringförmigen Düse (4), aus welcher eine Kunststoffschmelze zur Bildung des Folienschlauches (3) in einer Transportrichtung (y) extrudierbar ist,
wenigstens eine zumindest in Bereichen ringförmig ausgestaltete Fluidbeaufschlagungseinrichtung, die in Transportrichtung (y) auf den Blaskopf (5) folgt, die den Folienschlauch (3) ringförmig einfasst und mit welcher ein Fluid auf den Folienschlauch leitbar ist,
zumindest einen Ring (20), dessen Durchmesser größer ist als der ringförmig ausgestaltete Bereich der Fluidbeaufschlagungseinrichtung,
**dadurch gekennzeichnet,**
**dass** eine Verstelleinrichtung (21) vorgesehen ist, mit welcher der Ring (20) relativ zur Fluidbeaufschlagungseinrichtung höhenverstellbar ist,
**dass** die Verstelleinrichtung (21) in Transportrichtung (y) des Folienschlauches (3) weisende Stützelemente umfasst, in welche schräg verlaufende Führungsnuten eingebracht sind,
**dass** der Ring (20) von jeweils einem weiteren Ring (23, 24) konzentrisch eingefasst wird, welcher relativ zur Fluidbeaufschlagungseinrichtung und relativ zum Ring (20) mittels einer Verstelleinrichtung (21) höhenverstellbar ist, wobei Bereiche zwischen den Ringen (20, 23, 24) offen sind, so dass durch diese offenen Bereiche ein Druckausgleich stattfinden kann, und
**dass** jeder Ring (20, 23, 24) Stifte (31) umfasst, welche in die Führungsnuten greifen.

2. Vorrichtung nach dem vorstehenden Anspruch,
**dadurch gekennzeichnet, dass**
jeder Ring an dem Bauteil, relativ zu dem er höhenverstellbar ist, arretierbar ist.

3. Vorrichtung einem der vorstehenden Ansprüche,
**dadurch gekennzeichnet, dass**
jede schräge Führungsnut einen oder mehrere Nutansätze (32) umfasst, in welche die Stifte einrasten können.

4. Vorrichtung nach einem der vorstehenden Ansprüche,
**dadurch gekennzeichnet, dass**
die Verstelleinrichtung (21) zumindest einen elektromotorischen Antrieb umfasst.

5. Vorrichtung nach Anspruch 2,
**dadurch gekennzeichnet, dass**
jedem Ring (20, 23, 24) zumindest ein elektromotorischer Antrieb zugeordnet ist.

6. Verfahren zur Herstellung von Folienschläuchen (3), bei dem
aus einem Blaskopf (5) mit einer ringförmigen Düse eine Kunststoffschmelze zur Bildung des Folienschlauches (3) in einer Transportrichtung (y) extrudiert wird,
ein Fluid mittels einer zumindest in Bereichen ringförmig ausgestaltete Fluidbeaufschlagungseinrichtung, die in Transportrichtung (y) auf den Blaskopf (5) folgt und die den Folienschlauch (3) ringförmig einfasst, auf den Folienschlauch (3) geleitet wird,
zumindest ein Ring (20, 23, 24), dessen Durchmesser größer ist als der ringförmig ausgestaltete Bereich der Fluidbeaufschlagungseinrichtung, bereit gestellt wird,
**dadurch gekennzeichnet,**
**dass** mittels einer Verstelleinrichtung (21) der Ring (20) relativ zur Fluidbeaufschlagungseinrichtung höhenverstellt wird,
**dass** die Verstelleinrichtung (21) in Transportrichtung (y) des Folienschlauches (3) weisende Stützelemente umfasst, in welche schräg verlaufende Führungsnuten eingebracht sind,
**dass** der Ring (20) von jeweils einem weiteren Ring (23, 24) konzentrisch eingefasst wird, welcher relativ zur Fluidbeaufschlagungseinrichtung und relativ zum Ring (20) mittels einer Verstelleinrichtung (21) höhenverstellt wird, wobei Bereiche zwischen den Ringen (20, 23, 24) offen sind, so dass durch diese offenen Bereiche ein Druckausgleich stattfindet, und
**dass** jeder Ring (20, 23, 24) Stifte (31) umfasst, welche in die Führungsnuten greifen.

7. Verfahren nach dem vorstehenden Anspruch,
**dadurch gekennzeichnet, dass**
der Ring (20) erst nach dem Anfahren der Anlage und der Erzeugung einer stabilen Blase relativ zur Fluidbeaufschlagungseinrichtung höhenverstellt wird.

## Claims

1. Device (1) for producing film tubing (3), comprising:
a blown film die (5) having an annular nozzle (4), from which a plastic melt can be extruded in a transporting direction (y) for forming the film tubing (3),
at least one fluid application unit, which is annular in shape at least in certain regions and which follows the blown film die (5) in the transporting direction (y) and encloses the film tubing (3) in an annular manner, and by means of which a fluid can be directed onto the film tubing, and
at least one ring (20), the diameter of which is greater than the annularly shaped region of the fluid application unit.
**characterized**
**in that** an adjustment unit (21) is provided, by means of which the ring (20) can be adjusted in height relative to the fluid application unit,
**in that** the adjustment unit (21) comprises supporting elements, which extend in the transporting direction (y) of the film tubing (3) and in which guide grooves that run at an angle are incorporated,
**in that** the ring (20) is surrounded concentrically in each case by a further ring (23, 24) that can be adjusted in height relative to the fluid application unit and relative to the ring (20) by means of an adjustment unit (21), wherein regions between the rings (20, 23, 24) are open, so that a pressure equalization can take place through these open regions, and
**in that** each ring (20, 23, 24) comprises pins (31), which engage in the guide grooves.

2. Device according to the preceding claim,
**characterized in that**
each ring can be arrested on the component in relation to which it is adjustable in height.

3. Device according to one of the preceding claims,
**characterized in that**
each angled guide groove comprises one or more groove extensions (32), in which the pins can be snapped into place.

4. Device according to one of the preceding claims,
**characterized in that**
the adjustment unit (21) comprises at least one electromotive drive.

5. Device according to Claim 2,
**characterized in that**
each ring (20, 23, 24) is assigned at least one electromotive drive.

6. Method for producing film tubing (3), in which
a plastic melt for forming the film tubing (3) is extruded in a transporting direction (y) from a blown film die (5) having an annular nozzle,
a fluid is directed onto the film tubing (3) by means of a fluid application unit, which is annular in shape at least in certain regions and which follows the blown film die (5) in the transporting direction (y) and encloses the film tubing (3) in an annular manner,
at least one ring (20, 23, 24) is provided, the diameter of which is greater than the annularly shaped region of the fluid application unit,
**characterized**
**in that** the ring (20) is adjusted in height relative to the fluid application unit by means of an adjustment unit (21),
**in that** the adjustment unit (21) comprises supporting elements, which extend in the transporting direction (y) of the film tubing (3) and in which guide grooves that run at an angle are incorporated,
**in that** the ring (20) is surrounded concentrically in each case by a further ring (23, 24) that can be adjusted in height relative to the fluid application unit and relative to the ring (20) by means of an adjustment unit (21), wherein regions between the rings (20, 23, 24) are open, so that a pressure equalization can take place through these open regions, and
**in that** each ring (20, 23, 24) comprises pins (31), which engage in the guide grooves.

7. Method according to the preceding claim,
**characterized in that**
the ring (20) is adjusted in height relative to the fluid application unit only after the start-up of the device and production of a stable blown film.

## Revendications

1. Dispositif (1) de fabrication de gaines de film (3), comprenant :
une tête de soufflage (5) munie d'une buse (4) de forme annulaire hors de laquelle peut être extrudée une masse fondue de matière plastique en vue de former la gaine de film (3) dans une direction de transport (y),
au moins un appareil d'application de fluide de configuration annulaire, au moins dans certaines zones, qui suit la tête de soufflage (5) dans la direction de transport (y), lequel saisit la gaine de film (3) en une forme annulaire et avec lequel un fluide peut être amené sur la gaine de film,
au moins un anneau (20) dont le diamètre est supérieur à la zone de configuration annulaire de l'appareil d'application de fluide,
**caractérisé en ce**
**qu'**il existe un appareil de positionnement (21) avec lequel l'anneau (20) peut être positionné en hauteur par rapport à l'appareil d'application de fluide,
**que** l'appareil de positionnement (21) comprend des éléments supports orientés dans la direction de transport (y) de la gaine de film (3), dans lesquels sont incorporées des rainures de guidage s'étendant en biais,
**que** l'anneau (20) est respectivement entouré de manière concentrique d'un anneau supplémentaire (23, 24), lequel est positionnable en hauteur au moyen d'un appareil de positionnement (21) par rapport à l'appareil d'application de fluide et par rapport à l'anneau (20), des zones entre les anneaux (20, 23, 24) étant ouvertes de sorte qu'un équilibrage de pression puisse avoir lieu par le biais de ces zones ouvertes, et
**que** chaque anneau (20, 23, 24) comprend des broches (31) qui viennent en prise dans les rainures de guidage.

2. Dispositif selon la revendication précédente, **caractérisé en ce que** chaque anneau peut être bloqué contre l'élément structurel par rapport auquel il est positionnable en hauteur.

3. Dispositif selon l'une des revendications précédentes, **caractérisé en ce que** chaque rainure de guidage en biais possède une ou plusieurs amorces de rainure (32) dans lesquelles peuvent s'enclencher les broches.

4. Dispositif selon l'une des revendications précédentes, **caractérisé en ce que** le dispositif de positionnement (21) comprend au moins un mécanisme d'entraînement électromotorisé.

5. Dispositif selon la revendication 2, **caractérisé en ce qu'**au moins un mécanisme d'entraînement électromotorisé est associé à chaque anneau (20, 23, 24).

6. Procédé de fabrication de gaines de film (3), selon lequel :
une masse fondue de matière plastique est extrudée hors d'une tête de soufflage (5) munie d'une buse de forme annulaire en vue de former la gaine de film (3) dans une direction de transport (y),
un fluide est amené sur la gaine de film (3) au moyen d'un appareil d'application de fluide de configuration annulaire, au moins dans certaines zones, qui suit la tête de soufflage (5) dans la direction de transport (y) et qui saisit la gaine de film (3) en une forme annulaire,
au moins un anneau (20, 23, 24) dont le diamètre est supérieur à la zone de configuration annulaire de l'appareil d'application de fluide est mis à disposition,
**caractérisé en ce**
**que** l'anneau (20) est positionné en hauteur par rapport à l'appareil d'application de fluide au moyen d'un appareil de positionnement (21),
**que** l'appareil de positionnement (21) comprend des éléments supports orientés dans la direction de transport (y) de la gaine de film (3), dans lesquels sont incorporées des rainures de guidage s'étendant en biais,
**que** l'anneau (20) est respectivement entouré de manière concentrique d'un anneau supplémentaire (23, 24), lequel est positionné en hauteur au moyen d'un appareil de positionnement (21) par rapport à l'appareil d'application de fluide et par rapport à l'anneau (20), des zones entre les anneaux (20, 23, 24) étant ouvertes de sorte qu'un équilibrage de pression ait lieu par le biais de ces zones ouvertes, et
**que** chaque anneau (20, 23, 24) comprend des broches (31) qui viennent en prise dans les rainures de guidage.

7. Procédé selon la revendication précédente, **caractérisé en ce que** l'anneau (20) est positionné en hauteur par rapport à l'appareil d'application de fluide seulement après le démarrage de l'installation et la génération d'un soufflage stable.
